# FASCICULE DE BREVET EUROPEEN

(11) **EP 0 806 319 B1**
(45) Date de publication et mention de la délivrance du brevet: **23.09.1998**
(21) Numéro de dépôt: 97470010.6
(22) Date de dépôt: 29.04.1997
(51) Int. Cl.: B60N 2/16

(54) **Mécanisme de réglage de la hauteur d'un siège de véhicule automobile**
Höhenverstellvorrichtung für einen Fahrzeugsitz
Seat height adjustment mechanism for a vehicle seat

(30) Priorité: 10.05.1996 FR 9606036
(43) Date de publication de la demande: 12.11.1997
(73) Titulaire: BERTRAND FAURE EQUIPEMENTS S.A., 92641 Boulogne Cedex (FR)
(72) Inventeur: Guillouet, Erwan, 61100 Flers (FR)
(74) Mandataire: Schmit, Christian Norbert Marie

(56) Documents cités:
- EP-A- 0 577 517
- FR-A- 2 354 215
- FR-A- 2 596 337
- FR-A- 2 652 043
- GB-A- 2 118 031

## Description

La présente invention concerne un mécanisme de réglage en position angulaire d'un bras articulé sur un support, du type comportant un secteur circulaire denté solidaire du dit bras et ayant pour centre de courbure l'axe d'articulation du bras, et engrenant sur un pignon couramment utilisé comme organe de commande du déplacement angulaire du dit bras.

De tels mécanismes (connus, par exemple, de FR-A-2 652 043, correspondant aux préambules des revendications indépendantes 1 et 10) sont en particulier utilisés dans les sièges de véhicules automobiles, pour le réglage en hauteur de l'assise de ces sièges. Dans une telle application, l'assise du siège est reliée au plancher du véhicule ou, plus précisément, aux glissières, fixées au plancher, de réglage en position avant-arrière du siège, par des biellettes articulées respectivement sur l'assise et les dites glissières. Ces biellettes sont sensiblement parallèles et constituent deux cotés d'un quadrilatère, de forme voisine d'un parallélogramme, déformable. Le pivotement de ces biellettes provoque donc notamment un déplacement vertical de l'assise. Classiquement, une seule de ces biellettes est constituée d'un bras du type concerné par l'invention et dont le pivotement est commandé, l'autre biellette suivant nécessairement le mouvement du bras commandé. Le réglage en hauteur de l'assise est réalisé par une rotation du pignon du mécanisme qui provoque, par engrènement avec le secteur denté, le pivotement du bras articulé et donc le déplacement en hauteur du siège. Classiquement, le pignon d'entraînement est monté sur l'assise du siège, le centre de courbure du secteur denté circulaire étant alors situé sur l'axe d'articulation du bras sur l'assise. Le fonctionnement serait cependant similaire si le centre du secteur denté était situé sur l'axe d'articulation du bras sur la glissière et le pignon monté sur cette dernière.

On connaît ainsi un système de réglage en hauteur de siège comportant un tel bras pourvu d'un secteur denté à denture extérieure. Le pignon engrenant avec ce secteur denté est entraîné en rotation soit manuellement, soit par un moteur électrique et un réducteur. Du fait de la réversibilité du système pignon-secteur denté, le maintien du siège dans la position choisie par l'utilisateur est assuré par des moyens de blocage en rotation du dit pignon. Dans le cas d'une commande par moteur et réducteur, ce blocage peut par exemple être assuré grâce à un réducteur non réversible, par exemple du type à vis sans fin. Le blocage en rotation du pignon peut également être assuré par des verrouilleurs. Il existe aussi des systèmes de réglage en hauteur de l'assise dans lesquels le siège est poussé vers le haut par un ressort. Dans ce cas le pignon ne sert pas à l'entraînement du secteur denté mais seulement au blocage en position. Le réglage s'effectue, après avoir déverrouillé le pignon, en appuyant sur le siège à l'encontre du ressort, ou en retenant celui-ci, jusque dans la position désirée, et le maintien en position est assuré en reverrouillant alors le pignon.

Dans tous les cas, les efforts exercés sur le siège et retransmis aux biellettes et bras de liaison avec le plancher sont supportés par les moyens de blocage du pignon. Ces efforts peuvent être très élevés en cas de choc ou d'accident du véhicule, et on est donc conduit à surdimensionner les organes assurant ce blocage, pour éviter la rotation du pignon sous l'effet du couple généré par ces efforts, par rapport à ce qui serait suffisant, en terme de résistance mécanique, pour assurer le fonctionnement normal du mécanisme. Il en résulte un encombrement et un poids important pour ces organes, et un coût élevé.

La présente invention a pour but de résoudre les problèmes indiqués ci-dessus et vise en particulier à assurer un verrouillage en position efficace des bras des mécanismes mentionnés préalablement en cas d'efforts sur ceux-ci excédant les efforts normaux en utilisation courante, sans qu'il soit nécessaire de surdimensionner les organes de blocage.

Avec ces objectifs en vue, l'invention a pour objet un mécanisme de réglage en position angulaire d'un bras articulé sur un support autour d'un axe d'articulation, du type comportant un secteur circulaire denté solidaire du dit bras et engrenant avec un pignon monté rotatif sur le dit support, caractérisé en ce que le bras est formé de deux éléments reliés par au moins un pivot d'axe parallèle à l'axe d'articulation et au moins un organe de liaison ayant une résistance prédéterminée de manière que la liaison assurée par le dit organe de liaison soit rompue lorsqu'un couple de pivotement d'un des dits éléments par rapport à l'autre, autour du dit pivot, dépasse un seuil prédéterminé, et en ce que l'un au moins des dits éléments comporte une denture principale en arc de cercle ayant son centre de courbure situé sur l'axe d'articulation et au moins l'autre élément comporte une denture secondaire en arc de cercle de même centre, l'une des dentures étant une denture interne et l'autre une denture externe, le pignon étant situé entre les deux dites dentures, la distance radiale entre les dites dentures étant déterminée de manière que le pignon engrène uniquement avec la denture principale lorsque les deux éléments du bras sont rigidement liés, et que la denture secondaire vienne engrener avec le pignon suite à un pivotement relatif des deux dits éléments lorsque la liaison assurée par l'organe de liaison est rompue.

L'invention a également pour objet un système de réglage de la hauteur de l'assise d'un siège de véhicule automobile tel que défini dans la revendication indépendante 10.

Un premier élément du bras est articulé sur le support et le deuxième élément prolonge le premier élément à l'opposé de la dite articulation et son extrémité porte par exemple une seconde articulation sur la pièce ou l'organe à déplacer par rapport au dit support. Dans le cas d'une utilisation du mécanisme selon l'invention pour le réglage en hauteur de l'assise d'un siège d'automobile, le premier élément est par exemple articulé sur l'armature de l'assise, qui porte également le pignon et ses moyens de commande et/ou de blocage en rotation, et le deuxième élément est articulé par son extrémité sur la glissière du siège.

En cas d'un effort excessif exercé sur l'extrémité du bras opposée à l'articulation de celui-ci sur le support, cet effort se traduit par un couple de pivotement des deux éléments du bras l'un sur l'autre autour de l'axe du pivot. Au delà du seuil prédéterminé, ce couple provoque la rupture de la liaison assurée par l'organe de liaison, ce qui autorise la rotation relative de ces éléments autour du pivot, et conduit à l'entrée en contact de la denture secondaire avec le pignon. Le pignon est alors en prise avec les deux dentures, dans des zones diamétralement opposées et, comme ces deux dentures ne peuvent pas se déplacer l'une par rapport à l'autre du fait de la liaison des deux éléments assurée par le pivot, le pignon se trouve coincé entre ces dentures sans possibilité de rotation.

Tout l'effort supporté par le bras est alors transmis, via les dites dentures, au pignon, puis à son palier de guidage, et de là directement au support du bras, sans qu'aucun couple ne soit transmis aux organes d'entraînement ou de blocage en rotation du pignon. Ces organes peuvent donc être dimensionnés de manière à résister seulement aux efforts normaux subits en utilisation courante, et donc être d'encombrement et de coût réduits par rapport aux systèmes selon l'art antérieur, sans nuire à la sécurité de verrouillage requise en cas d'efforts excessifs.

On notera que le pivot est situé en dehors du secteur géométrique ayant pour centre l'axe d'articulation et couvrant les dites dentures, de manière à permettre le rapprochement des dentures l'une de l'autre lors du pivotement relatif des deux éléments du bras. L'axe du pivot pourra par exemple, non limitativement, être situé au voisinage d'un plan tangent à l'arc de cercle de l'une ou l'autre denture, ou au voisinage du cercle centré sur l'axe d'articulation et passant par le pignon.

Selon une disposition préférentielle, la denture principale est une denture interne, située de l'autre coté de l'articulation par rapport au pignon. La dite denture interne, constituant la denture principale, a un rayon de courbure supérieur à la denture externe qui constitue la denture secondaire. Cette disposition est favorable, pour un encombrement donné du mécanisme et des organes de support et d'entraînement du pignon, pour obtenir lors de l'utilisation normale du mécanisme un couple de pivotement du bras plus élevé pour un même couple moteur du pignon ou, inversement, pour réduire le couple transmis par la denture au pignon et donc pouvoir réduire également l'encombrement du pignon et de ses moyens d'entraînement et de blocage en rotation.

Préférentiellement, chacun des éléments du bras comporte une denture interne et une denture externe, les deux dentures internes et les deux denture externes étant situées respectivement en exacte correspondance, l'une à coté de l'autre, lorsque les deux éléments sont liés entre eux par l'organe de liaison. Ainsi, en cas de rupture de cette liaison, il y a toujours rapprochement d'une denture interne d'un élément avec la denture externe de l'autre élément, quel que soit le sens du pivotement relatif des éléments et donc quel que soit le sens de l'effort exercé sur l'extrémité du bras.

Préférentiellement encore, dans ce cas, les dentures interne et externe d'un même élément sont réalisées respectivement sur les cotés courbes opposés d'une fenêtre en forme d'arc de cercle ménagée dans le dit élément.

La denture secondaire, qui n'engrène pas avec le pignon lorsque les deux éléments sont rigidement liés, n'a pas besoin, du fait qu'elle sert uniquement à bloquer le pignon en cas d'effort excessif sur le bras, d'assurer un réel engrènement mécaniquement correct avec le pignon. Les dents de cette denture peuvent donc être de plus petites dimensions que les dents de la denture principale, et, à la limite, n'être que des rainures suffisantes pour empêcher la rotation du pignon par engagement de ces rainures avec les dents du pignon. On notera d'ailleurs que, si le pas de la denture secondaire est grand, par exemple égal à celui de la denture principale, une légère rotation du pignon reste possible avant que les dents de la denture secondaire ne vienne correctement en prise avec les dents du pignon. Un pas de la denture secondaire plus petit que le module du pignon et de la denture principale permettra, lorsque la liaison entre les deux éléments du bras est rompue, de limiter cette rotation et le pivotement du bras, en assurant une plus grande rapidité de réaction dans le blocage du pignon.

Selon le sens du couple de pivotement exercé sur l'extrémité du bras, les déplacements relatifs des deux éléments au niveau du pignon ne sont pas tout à fait équivalents. En effet, le pignon et l'axe d'articulation du premier élément du bras sont montés sur le même support, et donc avec un entraxe déterminé assurant un engrènement normal de la denture principale du premier élément avec le pignon. Dans un sens, le pivotement du deuxième élément par rapport au premier va simplement rapprocher la denture secondaire du deuxième élément du pignon et assurer ainsi le blocage. Par contre, dans l'autre sens, c'est la denture principale du deuxième élément qui va pousser le pignon jusqu'à le faire entrer en prise avec la denture secondaire du premier élément. Il est donc nécessaire que, dans ce cas, le palier du pignon puisse se déplacer légèrement, d'une distance suffisante pour que le pignon puisse venir en prise avec la denture secondaire du premier élément. On pourra prévoir à cet effet des moyens de fixation déformables du palier du pignon sur le support, cette fixation étant définie de manière à ne se déformer que en cas d'efforts excessifs. Par exemple, le palier du pignon pourra être monté dans un alésage ménagé dans un collet monté réalisé dans la tôle constitutive du support et, afin de permettre le dit déplacement en cas d'effort excessif, le collet monté pourra être fendu pour pouvoir se déformer en s'écartant sous un effort important et autoriser ainsi le déplacement du pignon.

Selon un autre mode de réalisation destiné à supprimer le besoin d'un déplacement du palier du pignon dans le cas évoqué ci-dessus, les deux éléments de bras sont reliés par deux pivots situés de part et d'autre d'un plan passant par l'axe d'articulation et les dentures, chacun des dits pivots étant lié à un des éléments et ayant une possibilité de déplacement relatif par rapport à l'autre élément selon une trajectoire en arc de cercle centré sur l'autre pivot. Dans ce mode de réalisation, le pivotement relatif d'un élément par rapport à l'autre, en cas de rupture de la liaison entre les dits éléments, s'effectuera autour de l'un ou l'autre des pivots selon le sens du couple exercé à l'extrémité du bras.

Selon une disposition particulière, les deux pivots sont montés solidaires d'un des éléments et passent dans des trous oblongs réalisés dans l'autre élément et permettant le dit déplacement relatif.

Du fait que la longueur du bras de levier entre l'extrémité du bras et le point de pivot est alors différente selon le sens du dit couple, puisque le pivot actif n'est pas le même dans les deux cas, deux organes de liaison seront préférentiellement prévus, respectivement associés à chaque pivot, et la résistance mécanique de chacun déterminée de manière que la liaison soit rompue pour sensiblement le même effort exercé à l'extrémité du bras quel que soit le sens de cet effort.

L'invention sera mieux comprise et d'autres caractéristiques et avantages apparaîtront dans la description qui va être faite, à titre d'exemple, de deux modes de réalisation d'un mécanisme conforme à l'invention, appliqué au réglage de la hauteur de l'assise d'un siège de véhicule automobile.

On se reportera aux dessins annexés dans lesquels :
- la figure 1 est une vue latérale de principe d'un système de réglage de hauteur d'assise,
- la figure 2 représente le mécanisme, selon un premier mode de réalisation et dans sa position de service normal,
- la figure 3 représente le mécanisme dans la position bloquée suite à un effort excessif, provoqué par exemple par un choc du véhicule, dans le sens correspondant à un abaissement de l'assise du siège,
- la figure 4 représente le mécanisme dans la position bloquée suite à un effort excessif dans le sens opposé,
- la figure 5 représente un deuxième mode de réalisation, dans la position de service normale du mécanisme,
- les figures 6 et 7 représentent le mécanisme verrouillé après un tel choc, respectivement dans l'un et l'autre sens de l'effort subi par le bras,
- la figure 8 est une vue en coupe selon la ligne VIII-VIII de la figure 2,
- la figure 9 est une vue en coupe selon la ligne IX-IX de la figure 2.

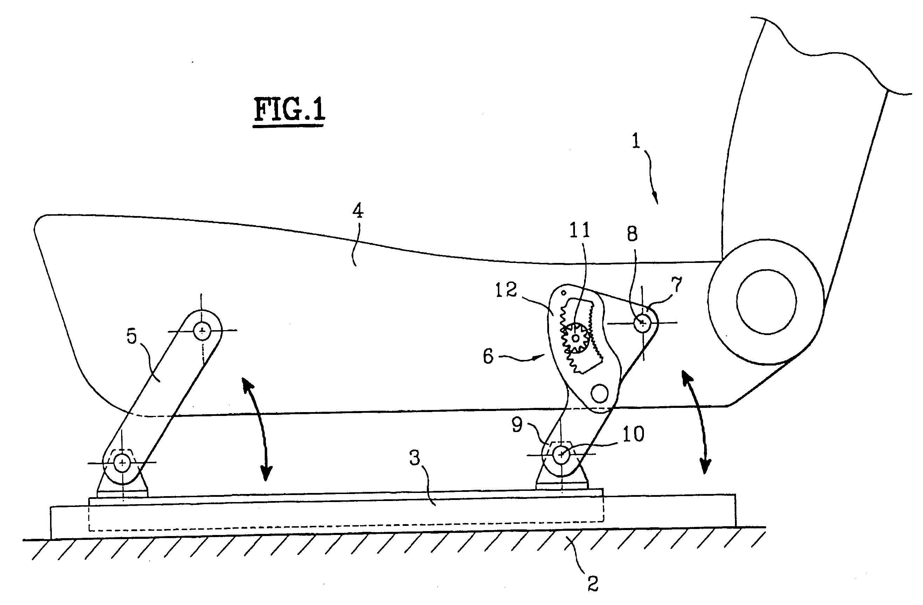

Le dessin de la figure 1 représente schématiquement un siège 1 fixé sur le plancher 2 du véhicule par l'intermédiaire de glissières 3. Pour rendre le siège réglable en hauteur, l'armature, non représentée, de l'assise 4 est reliée à la partie mobile de la glissière 3 par des biellettes 5 et des bras 6 articulés de manière à former avec la glissière et la dite armature un parallélogramme déformable. Une extrémité 7 du bras 6 est montée pivotante sur un arbre d'articulation 8 lié à l'assise, et la deuxième extrémité 9 du bras est articulée en 10 sur une patte solidaire de la partie mobile de la glissière 3.

Le positionnement angulaire du bras 6 est réglable par un pignon 11 engrenant avec un secteur denté 12 solidaire du bras 6. Le pignon 11 est monté en position fixe sur l'assise 4. Le pignon 11 peut être entraîné en rotation soit par une poignée manuelle soit par un moteur électrique et un réducteur. Le siège peut aussi comporter un système de ressorts poussant l'assise vers le haut, le réglage en hauteur s'effectuant alors simplement en appuyant sur l'assise à l'encontre de l'action de ces ressorts, ou en la retenant, pour l'amener dans la position désirée par l'utilisateur. Quel que soit le cas, le maintien dans la position choisie, en utilisation normale, est toujours assuré par un verrouillage en rotation du pignon 11, qui de ce fait empêche le pivotement du bras 6.

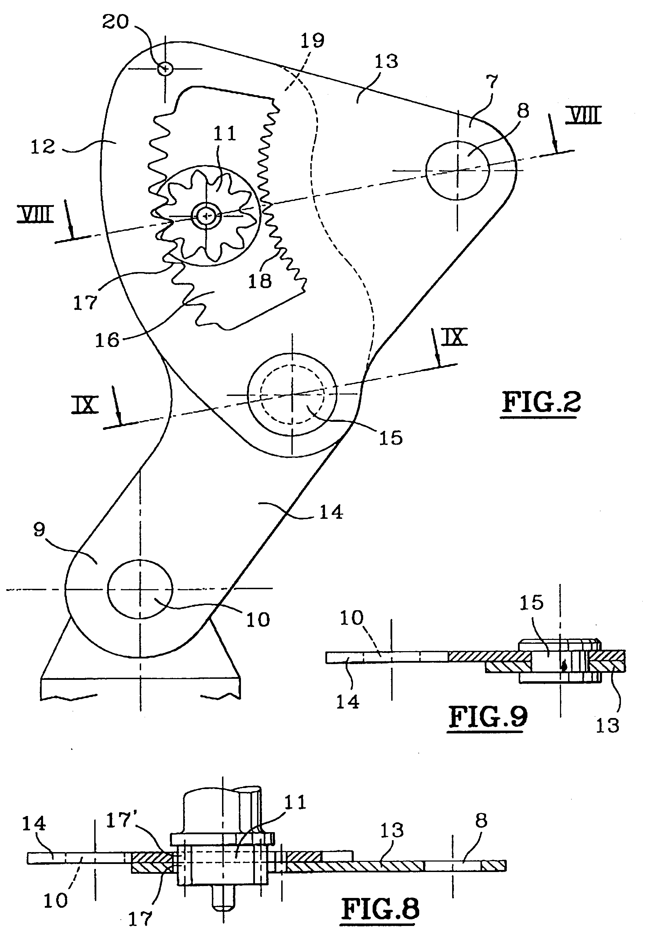

En relation avec les figures 2 à 4, on va maintenant décrire plus en détail la réalisation du bras 6 conforme à l'invention. Le bras 6 comporte un premier élément 13 constitué par exemple d'une tôle ayant une forme triangulaire, ou en secteur de disque, s'étendant dans un plan perpendiculaire à l'axe d'articulation 8 et formant un demi-bras supérieur, articulé sur le dit axe d'articulation 8, et un deuxième élément 14, s'étendant parallèlement contre le premier élément et formant un demi-bras inférieur, articulé sur l'axe de l'articulation 10 de la glissière. Les deux éléments sont articulés l'un sur l'autre par un pivot 15 d'axe parallèle aux articulations 8 et 10, constitué par exemple d'un rivet ou similaire assurant le maintien des deux éléments l'un contre l'autre comme on le voit sur la figure 9, ce pivot étant situé par exemple sensiblement sur la ligne des axes des dites articulations et à mi-distance entre ces derniers. Cette disposition des différents axes n'est toutefois pas limitative, comme on le comprendra aisément par l'explication qui sera faite par la suite du fonctionnement du mécanisme.

Une fenêtre 16 en forme d'arc de cercle centré sur l'axe d'articulation 8 est réalisée dans le premier élément 13, sensiblement à même distance de l'articulation 8 que le pivot 15. Une denture interne 17 est réalisée sur le bord courbe de cette fenêtre 16 le plus éloigné de l'articulation 8, qui constitue le secteur denté 12. Une denture externe 18 est réalisée sur l'autre bord courbe de la fenêtre, du coté de l'articulation 8. Une fenêtre similaire 16', pourvue de dentures correspondantes 17' et 18', est ménagée dans une portion 19 du deuxième élément 14, qui s'étend contre le premier élément, et de manière que, dans la position de service normal du mécanisme représentée figure 2, les dentures 17, 17' et 18, 18' soient respectivement en exacte coïncidence. Le pignon 11 est situé dans les dites fenêtres 16, 16' et engrène à la fois avec les dentures internes, ou dentures principales, 17 et 17' des deux éléments, comme on le voit figure 8. La largeur des fenêtres 16, 16', c'est à dire la distance radiale entre les dentures internes 17,17' et les dentures externes 18, 18', est supérieure au diamètre du pignon 11 de sorte que les dentures externes, ou dentures secondaires 18, 18' ne soient pas en contact avec le pignon 11 dans la position représentée figure 2 et ne gênent pas sa rotation. Ces dentures secondaires n'ont pas d'utilité au cours de l'utilisation normale du mécanisme et pourront par exemple être réalisées avec un module moitié de celui de la denture principale, ou encore plus petit.

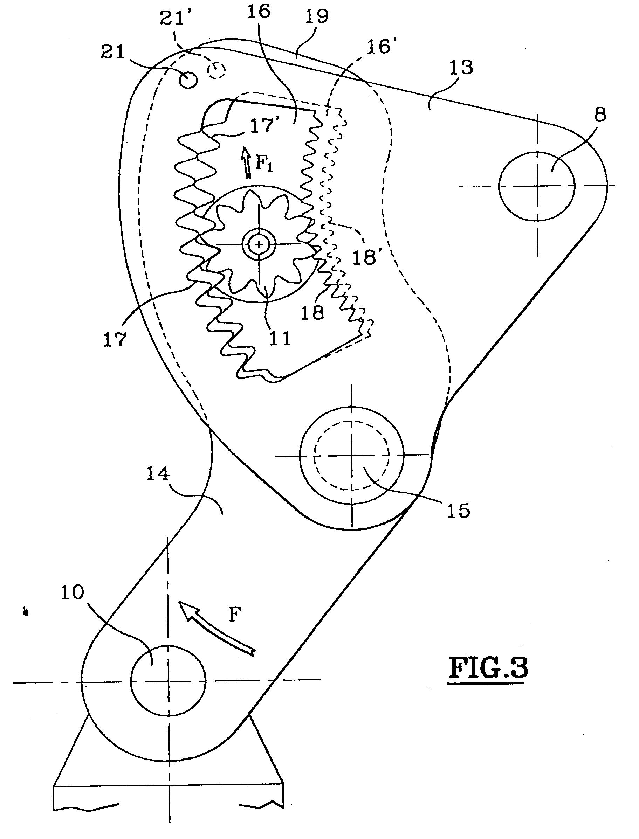

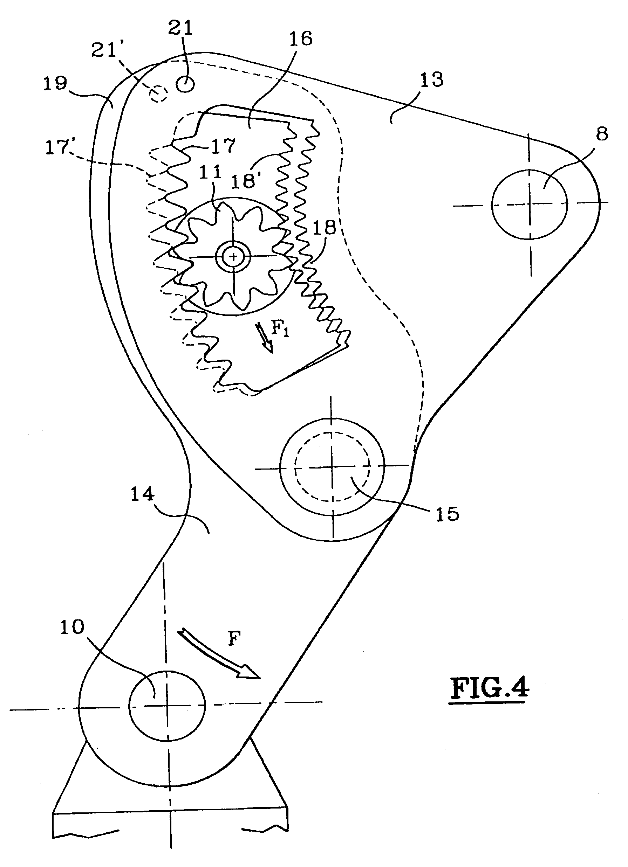

Pour éviter leur pivotement relatif autour du pivot 15 en utilisation normale, les deux éléments 13 et 14 sont solidarisés par ailleurs par un organe de liaison, constitué ici d'une goupille 20 emmanchée dans deux perçages 21, 21' réalisés respectivement dans le premier et le deuxième élément à distance du pivot 15, par exemple du coté des fenêtres 16,16' opposé au dit pivot. La matière et les dimensions de la goupille 20 sont déterminées de manière que la goupille soit cisaillée à l'interface entre les deux éléments 13 et 14 en cas d'un couple de pivotement relatif des dits éléments autour du pivot 15 excédant une valeur prédéterminée. Une fois la goupille 20 rompue, les deux éléments 13 et 14 peuvent pivoter l'un par rapport à l'autre autour de l'axe du pivot 15, assurant le verrouillage du mécanisme en empêchant toute rotation du pignon, comme on va maintenant le voir en relation avec les figures 3 et 4.

Sur le dessin de la figure 3 est représenté la position du mécanisme après cisaillement de la goupille 20 provoqué par un effort excessif ayant provoqué sur l'extrémité 9 du bras un couple dans le sens de la flèche F. Suite à la rupture de la goupille 20, le deuxième élément 14 a pivoté autour du pivot 15, conduisant à ce que la portion 19 du deuxième élément se rapproche de l'articulation 8. Ce faisant, la denture principale 16' du deuxième élément 14 a repoussé le pignon 11 jusqu'à ce que ce dernier vienne en contact avec la denture secondaire 18 du premier élément 13, les dents du pignon s'insérant dans les dents de la denture secondaire. Ainsi bloqué entre la denture principale 17' du deuxième élément et la denture secondaire 18 du premier élément, toute rotation du pignon est impossible, et au lieu que le couple F ne se transforme en un couple de rotation du pignon sur lui-même, lequel serait supporté par les organes d'entraînement ou de blocage en rotation du pignon, il ne subsiste qu'une force F₁ perpendiculaire à l'axe du pignon et transmise intégralement à l'armature de l'assise sur laquelle le pignon est monté.

Le dessin de la figure 4 montre la position du mécanisme dans le cas ou l'effort exercé sur le bras est de sens opposé au cas illustré par la figure 3, et on comprendra sans difficulté que le blocage en rotation du pignon 11 s'effectue de manière similaire, à part que dans le présent cas le pignon se trouve enserré entre la denture principale 17 du premier élément 13 et la denture secondaire 18' du deuxième élément 14.

On notera que dans le cas illustré par la figure 4, le pignon 11 étant déjà en prise avec la denture principale 17 du premier élément 13 avant la rupture de la goupille 20, cette rupture a conduit à ce que la denture 18' du deuxième élément 14 vienne s'appuyer sur les dents du pignon, sans provoquer pratiquement de déplacement de ce dernier, alors que dans le cas de la figure 3, le pignon est poussé par le deuxième élément vers la denture secondaire du premier élément, et pour autoriser ce déplacement, il est nécessaire de prévoir un montage du pignon sur l'armature de l'assise qui permette ce déplacement.

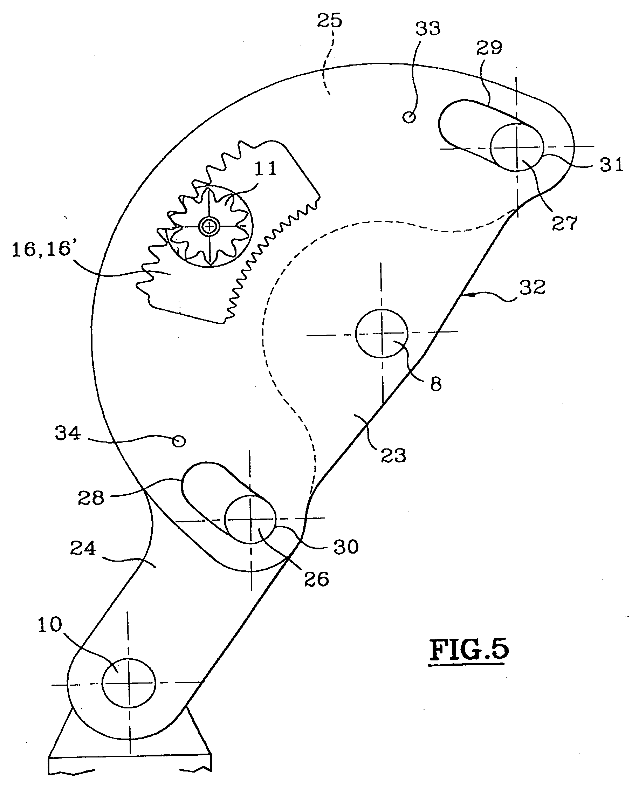

Le mode de réalisation qui va maintenant être décrit en relation avec les figures 5 à 7 permet de s'affranchir d'un tel montage spécifique du pignon.

Dans ce mode de réalisation, le premier élément 23 a une forme générale de demi disque ayant pour centre l'axe d'articulation 8, et le deuxième élément 24 a une forme de faucille avec une portion 25 en demi-cercle qui s'étend contre le premier élément, sensiblement en correspondance avec la périphérie du dit demi-disque.

Les deux éléments comportent des fenêtres 16, 16' similaires à celles décrites en relation avec le premier mode de réalisation. Ces fenêtres sont situées dans la partie médiane du premier élément 23 et de la portion en demi-cercle 25 du deuxième élément 24.

Dans ce mode de réalisation, le mécanisme comporte deux pivots 26, 27 reliant les deux éléments, situés respectivement de part et d'autre du plan médian passant par l'axe d'articulation 8 et le milieu des fenêtres 16, 16'. Dans l'exemple représenté, les deux pivots sont solidaires du deuxième élément 24, le premier pivot 26 étant situé sensiblement en alignement avec les articulations 8 et 10 et entre celles-ci, comme le pivot 15 du premier mode de réalisation, et le deuxième pivot 27, est situé vers l'extrémité de la portion en demi-cercle 25, sensiblement diamétralement opposé au pivot 26 par rapport à l'articulation 8. Ces deux pivots passent respectivement dans des trous oblongs 28, 29 réalisés dans le premier élément 23. Ces trous oblongs sont incurvés, chacun ayant pour centre de courbure l'axe du pivot passant dans l'autre trou et, dans la position d'utilisation normale du mécanisme, les pivots 26 et 27 sont maintenus en butée contre une extrémité 30, respectivement 31, des trous oblongs, située du même coté des dits trous par rapport au bras, par exemple les extrémités des trous oblongs situées vers le bord 32 du premier élément opposé à la zone des fenêtres 16, 16'.

Les deux éléments 23, 24 sont par ailleurs solidarisés dans cette position par deux goupilles 33, 34 emmanchées dans des perçages réalisés dans les dits éléments, comme dans le premier mode de réalisation, et situées respectivement à proximité des pivots 26, 27.

Dans le cas d'un choc conduisant à un effort dépassant la normale sur l'extrémité inférieure du bras, dans le sens de la flèche F₂, le deuxième élément 24 va pivoter autour du deuxième pivot 27, lequel reste en butée contre l'extrémité 31 du trou oblong 29, en cisaillant la goupille 34, le premier pivot 26 se déplaçant dans son trou oblong 28, jusqu'à ce que la denture secondaire 18' du deuxième élément arrive en contact avec le pignon 11 et empêche sa rotation.

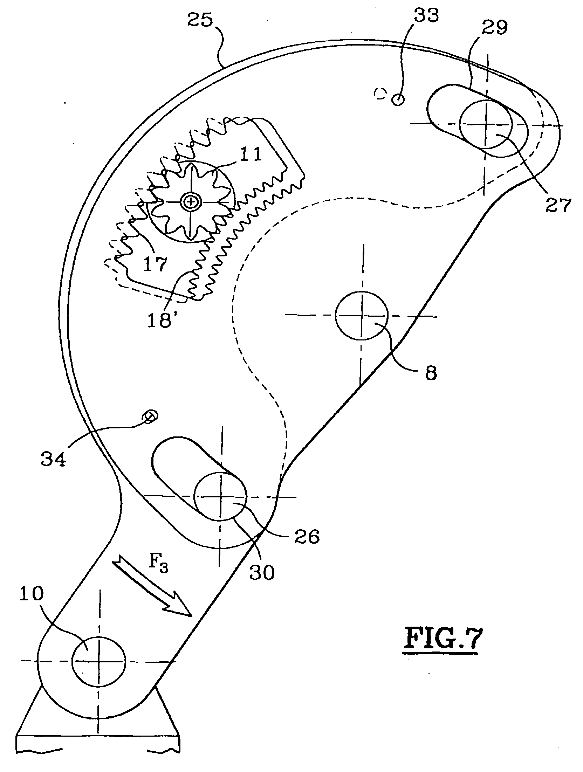

Dans le cas où l'effort s'exerce dans l'autre sens (flèche F₃) comme représenté figure 7, le deuxième élément pivote alors autour du premier pivot 26 qui reste en butée contre l'extrémité 30 du trou oblong 28, la goupille 33 étant cisaillée et le deuxième pivot 27 se déplaçant dans le trou oblong 29, jusqu'à ce que la denture secondaire 18' du deuxième élément arrive en contact avec le pignon 11 et empêche sa rotation.

On notera que dans ce deuxième mode de réalisation, quel que soit le sens du pivotement relatif des deux éléments, c'est toujours la denture secondaire 18' du deuxième élément 24 qui se déplace pour venir bloquer le pignon 11, qui reste toujours engrené avec la denture principale 17 du premier élément 23, et donc à distance fixe de l'articulation 8. Il n'est donc pas nécessaire que la fixation du pignon 11 sur l'assise du siège soit déformable. Par ailleurs il n'est pas non plus nécessaire de réaliser une denture externe sur le premier élément. La denture interne 17' du deuxième élément, qui n'est plus indispensable, pourra cependant être conservée en complément de la denture principale 17 du premier élément, lors du service normal du mécanisme.

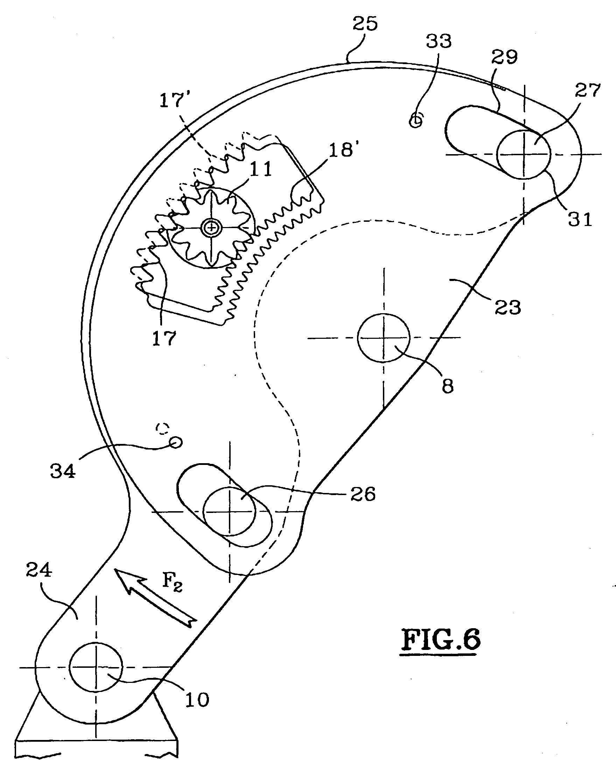

On notera encore que, du fait de longueurs différentes des bras de leviers mis en jeu selon le sens de l'effort exercé, les résistances au cisaillement des deux goupilles 33 et 34 devront être différentes si l'on souhaite que le verrouillage du mécanisme s'effectue pour une même intensité de l'effort quelque soit le sens de celui-ci. De plus, il sera également tenu compte dans la détermination de ces goupilles que si l'une des goupilles est totalement cisaillée lors du pivotement relatif des deux éléments, l'autre goupille subit également un cisaillement partiel, comme on le voit sur les figures 6 et 7, du fait qu'elle ne se trouve pas sur l'axe de pivotement.

L'invention n'est pas limitée aux modes de réalisation décrits précédemment uniquement à titre d'exemples. En particulier la position relative des articulations, pivots et dentures pourra être modifiée tout en respectant le principe de l'invention tel que défini dans les revendications. On pourra également remplacer les goupilles mentionnées ci-dessus par d'autres organes de liaison assurant la solidarisation des deux éléments du bras sous charge normale et permettant leur pivotement relatif au-delà d'un seuil de charge prédéterminé, tels que par exemple des emboutis ou semi-découpes réalisés en correspondance dans les tôles constitutives des éléments et s'insèrant l'un dans l'autre, ou autres pièces de liaison ayant une charge de rupture prédéterminée. Egalement l'un des deux éléments 13 et 14 pourra être conformé de manière à bien assurer la transmission des efforts dans un plan et éviter les porte-à-faux au niveau du pivot 15 et du pignon 11 et les risques de fléchissement des tôles constitutives des dits éléments, par exemple en le réalisant sous forme de deux tôles disposées respectivement de part et d'autre du deuxième élément.

## Revendications

1. Mécanisme de réglage en position angulaire d'un bras (6) articulé sur un support (4) autour d'un axe d'articulation (8), du type comportant un secteur circulaire denté solidaire du dit bras et engrenant avec un pignon (11) monté rotatif sur le dit support, caractérisé en ce que le bras (6) est formé de deux éléments (13, 14; 23, 24) reliés par au moins un pivot (15; 26, 27) d'axe parallèle à l'axe d'articulation et au moins un organe de liaison (20; 33, 34) ayant une résistance prédéterminée de manière que la liaison assurée par le dit organe de liaison soit rompue lorsqu'un couple de pivotement d'un des dits éléments par rapport à l'autre, autour du dit pivot, dépasse un seuil prédéterminé, et en ce que l'un au moins des dits éléments comporte une denture principale (17, 17') en arc de cercle ayant son centre de courbure situé sur l'axe d'articulation (8) et au moins l'autre élément comporte une denture secondaire (18,18') en arc de cercle de même centre, le pignon (11) étant situé entre les deux dites dentures, la distance radiale entre les dites dentures étant déterminée de manière que le pignon (11) engrène uniquement avec la denture principale (17, 17') lorsque les deux éléments du bras sont rigidement liés, et que la denture secondaire (18, 18') vienne engrener avec le pignon suite à un pivotement relatif des deux dits éléments lorsque la liaison assurée par l'organe de liaison est rompue.

2. Mécanisme selon la revendication 1, caractérisé en ce que la denture principale (17, 17') est une denture interne, située de l'autre coté de l'articulation (8) par rapport au pignon (11).

3. Mécanisme selon l'une des revendications 1 ou 2, caractérisé en ce que chacun des éléments (13, 14; 23, 24) du bras comporte une denture interne (17, 17') et une denture externe (18, 18'), les deux dentures internes et les deux denture externes étant situées respectivement en exacte correspondance, l'une à coté de l'autre, lorsque les deux éléments sont liés entre eux par l'organe de liaison.

4. Mécanisme selon la revendication 3, caractérisé en ce que les dentures interne (17, 17') et externe (18, 18') d'un même élément sont réalisées respectivement sur les cotés courbes opposés d'une fenêtre (16,16') en forme d'arc de cercle ménagée dans le dit élément.

5. Mécanisme selon la revendication 1, caractérisé en ce que les dents de la denture secondaire (18, 18') sont de plus petites dimensions que les dents de la denture principale (17, 17').

6. Mécanisme selon la revendication 1, caractérisé en ce que le pignon (11) est monté sur le support (4) par des moyens de fixation déformables.

7. Mécanisme selon la revendication 1, caractérisé en ce que les deux éléments de bras (23, 24) sont reliés par deux pivots (26, 27) situés de part et d'autre d'un plan (P) passant par l'axe d'articulation (8) et les dentures, chacun des dits pivots étant lié à un des éléments et ayant une possibilité de déplacement relatif par rapport à l'autre élément selon une trajectoire en arc de cercle centré sur l'autre pivot.

8. Mécanisme selon la revendication 7, caractérisé en ce qu'il comporte deux organes de liaison (33, 34) respectivement associés à chaque pivot (26, 27).

9. Mécanisme selon la revendication 7, caractérisé en ce que les deux pivots (26, 27) sont solidaires d'un des éléments (24) et passent dans des trous oblongs (28, 29) réalisés dans l'autre élément (23).

10. Système de réglage de la hauteur de l'assise d'un siège de véhicule automobile comportant un bras pivotant (6) articulé d'une part sur l'assise (4) et d'autre part sur le plancher (2) ou une glissière (3) du véhicule caractérisé en ce qu'il comporte un mécanisme de réglage en position angulaire du dit bras selon l'une quelconque des revendications 1 à 9.

## Claims

1. Mechanism for adjusting the angular position of an arm (16) articulated on a support (4) about an articulation axis (8), of the type having a circular toothed sector fixed to the said arm and meshing with a pinion (11) rotatably mounted on the said support, characterised in that the arm (6) is formed by two elements (13, 14; 23, 24) connected by at least one pivot (15; 26, 27) with an axis parallel to the articulation axis and at least one connecting member (20; 33, 34) having a predetermined strength so that the connection provided by the said connecting member is broken when a torque arising from the pivoting of one of the said elements with respect to the other, about the said pivot, exceeds a predetermined threshold, and in that at least one of the said elements has a main set of teeth (17, 17') in the shape of an arc of a circle having its centre of curvature situated on the articulation axis (8) and at least the other element has a secondary set of teeth (18, 18') in the shape of an arc of a circle with the same centre, the pinion (11) being situated between the two said sets of teeth, the radial distance between the said sets of teeth being determined so that the pinion (11) meshes solely with the main set of teeth (17, 17') when the two elements of the arm are rigidly connected, and so that the secondary set of teeth (18, 18') comes to mesh with the pinion following a relative pivoting of the two said elements when the connection provided by the connecting member is broken.

2. Mechanism according to Claim 1, characterised in that the main set of teeth (17, 17') is an internal set of teeth, situated on the other side of the articulation (8) with respect to the pinion (11).

3. Mechanism according to one of Claims 1 or 2, characterised in that each of the elements (13, 14; 23, 24) of the arm has an internal set of teeth (17, 17') and an external set of teeth (18, 18'), the two internal sets of teeth and the two external sets of teeth being situated respectively in exact correspondence, one alongside the other, when the two elements are connected together by the connecting member.

4. Mechanism according to Claim 3, characterised in that the internal (17, 17') and external (18, 18') sets of teeth on the same element are produced respectively on the opposite curved sides of an aperture (16, 16') in the shape of an arc of circle formed in the said element.

5. Mechanism according to Claim 1, characterised in that the teeth of the secondary set of teeth (18, 18') are smaller than the teeth of the main set of teeth (17, 17').

6. Mechanism according to Claim 1, characterised in that the pinion (11) is mounted on the support (4) by deformable fixing means.

7. Mechanism according to Claim 1, characterised in that the two arm elements (23, 24) are connected by two pivots (26, 27) situated on each side of a plane (P) passing through the articulation axis (8) and the sets of teeth, each of the said pivots being connected to one of the elements and having a possibility of relative movement with respect to the other element on a path in the shape of an arc of a circle centred on the other pivot.

8. Mechanism according to Claim 7, characterised in that it has two connecting members (33, 34) respectively associated with each pivot (26, 27).

9. Mechanism according to Claim 7, characterised in that the two pivots (26, 27) are fixed to one of the elements (24) and pass through oblong holes (28, 29) produced in the other element (23).

10. System for adjusting the height of the seat squab of a motor vehicle having a pivoting arm (6) articulated on the one hand on the squab (4) and on the other hand on floor (2) or a runner (3) of the vehicle, characterised in that it includes a mechanism for adjusting the angular position of the said arm according any one of Claims 1 to 9.

## Patentansprüche

1. Einstellvorrichtung der Winkeleinstellung eines auf einem Träger (4) und um eine Schwenkachse (8) schwenkbaren Armes (6) mit einem verzahnten Kreisausschnitt, der mit dem Arm verbunden ist und mit einem auf dem Träger drehbar montierten Ritzel (11) in Eingriff steht,
dadurch gekennzeichnet, daß
der Arm (6) durch zwei Elemente (13, 14; 23, 24) gebildet wird, die mit mindestens einem zur Schwenkachse parallelen Drehachse (15; 26, 27) und mit mindestens einem Verbindungselement (20; 33, 34) verbunden sind, wobei das Verbindungselement eine vorbestimmte Festigkeit aufweist, so daß sich die durch das Verbindungselement gesicherte Verbindung löst, wenn ein Drehmoment an einem der beiden Elemente um die Drehachse einen vorbestimmten Schwellwert übersteigt, und daß mindestens eines der Elemente eine Hauptverzahnung (17, 17') auf einem Kreisbogen aufweist, wobei sich der Mittelpunkt des Bogens auf der Schwenkachse (8) befindet und das andere Element mindestens eine zweite Verzahnung (18, 18') auf einem Kreisbogen mit demselben Mittelpunkt aufweist, wobei das Ritzel (11) zwischen den zwei Verzahnungen angeordnet ist und der radiale Abstand zwischen diesen Verzahnungen so bestimmt wird, daß das Ritzel (11) nur in die Hauptverzahnung (17, 17') eingreift, solange die zwei Elemente starr verbunden sind, und daß nach dem relativen Schwenken der beiden Elemente die zweite Verzahnung (18, 18') in das Ritzel eingreift, wenn sich die durch das Verbindungselement gesicherte Verbindung löst.

2. Mechanismus nach Anspruch 1, dadurch gekennzeichnet, daß die Hauptverzahnung (17, 17') eine Innenverzahnung ist, die verglichen zum Ritzel (11) auf der anderen Seite der Achse (8) angeordnet ist.

3. Mechanismus nach einem der Ansprüche 1 oder 2, dadurch gekennzeichnet, daß jedes der Elemente (13, 14; 23, 24) des Armes eine Innenverzahnung (17, 17') und eine Außenverzahnung (18, 18') umfaßt, wobei die zwei Innenverzahnungen und die zwei Außenverzahnungen jeweils exakt übereinander angeordnet sind, wenn die zwei Elemente miteinander durch ein Verbindungselement verbunden sind.

4. Mechanismus nach Anspruch 3, dadurch gekennzeichnet, daß die Innenverzahnung (17, 17') und die Außenverzahnung (18, 18') des gleichen Elements jeweils auf den gegenüberliegenden gebogenen Seiten eines kreisbogenförmigen Fensters (16, 16') angeordnet sind, das in dieses Element eingelassen ist.

5. Mechanismus nach Anspruch 1, dadurch gekennzeichnet, daß die Zähne der zweiten Verzahnung (18, 18') kleiner sind als die Zähne der Hauptverzahnung (17, 17').

6. Mechanismus nach Anspruch 1, dadurch gekennzeichnet, daß das Ritzel (11) an den Träger (4) durch verformbare Befestigungseinrichtungen montiert ist.

7. Mechanismus nach Anspruch 1, dadurch gekennzeichnet, daß die Elemente der Arme (23, 24) durch zwei Drehachsen (26, 27) verbunden sind, die auf beiden Seiten einer durch die Schwenkachse (8) und die Zähne gehende Ebene (P) angeordnet sind, wobei jede der Drehachsen an einem der Elemente verbunden ist und sich relativ zum anderen Element auf dem Kreisbogen verschieben kann, wobei dieser auf der anderen Drehachse zentriert ist.

8. Mechanismus nach Anspruch 7, dadurch gekennzeichnet, daß er zwei Verbindungselemente (33, 34) umfaßt, die mit jeder Drehachse (26, 27) verknüpft sind.

9. Mechanismus nach Anspruch 7, dadurch gekennzeichnet, daß die zwei Drehachsen (26, 27) an einem der Elemente (24) verbunden sind, und durch Längslöcher (28, 29) gehen, die im anderen Element (23) vorgesehen sind.

10. Höhenverstellvorrichtung eines Kraftfahrzeugsitzes mit einem schwenkbaren Arm (6), der einerseits an der Sitzfläche (4) und andererseits an dem Boden (2) oder an einer Gleitschiene (3) des Fahrzeuges schwenken kann, dadurch gekennzeichnet, daß sie eine Verstellvorrichtung für die Winkeleinstellung eines Armes nach einem der Ansprüche 1 bis 9 umfaßt.
